(19) Europäisches Patentamt
European Patent Office
Office européen des brevets

(11) Numéro de publication: **0 542 599 B1**

(12) **FASCICULE DE BREVET EUROPEEN**

(45) Date de publication de fascicule du brevet: **24.05.95**

(51) Int. Cl.$^6$: **D06F 33/02**, D06F 37/30

(21) Numéro de dépôt: **92402969.7**

(22) Date de dépôt: **03.11.92**

(54) **Lave-linge ou sèche-linge à programmateur comprenant deux bases de temps de types différents.**

(30) Priorité: **15.11.91 FR 9114098**

(43) Date de publication de la demande:
**19.05.93 Bulletin 93/20**

(45) Mention de la délivrance du brevet:
**24.05.95 Bulletin 95/21**

(84) Etats contractants désignés:
**DE ES FR IT**

(56) Documents cités:
**EP-A- 0 252 817**
**FR-A- 2 450 304**
**FR-A- 2 598 443**
**FR-A- 1 235 659**
**FR-A- 2 588 581**
**FR-E- 78 005**

(73) Titulaire: **CIAPEM**
**137, rue de Gerland**
**F-69007 - Lyon (FR)**

(72) Inventeur: **Kubacsi, Michel, Thomson-CSF, SCPI**
**50, rue J.P. Timbaud**
**F-92402 Courbevoie Cedex (FR)**
Inventeur: **Montagnon, Bruno, Thomson-CSF, SCPI**
**50, rue J.P. Timbaud**
**F-92402 Courbevoie Cedex (FR)**

(74) Mandataire: **Ruellan-Lemonnier, Brigitte et al**
**THOMSON CONSUMER ELECTRONICS**
**9 Place des Vosges**
**La Défense 10**
**F-92400 Courbevoie (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

L'invention est relative à un appareil électroménager du type lave-linge ou sèche-linge comprenant un tambour entraîné par un moteur électrique ainsi qu'un programmateur.

Pour simplifier l'exposé on se référera dans ce qui suit la plupart du temps à un lave-linge. Toutefois l'invention s'applique de façon plus générale à tout type d'appareil électroménager à programmateur et moteur électrique d'entraînement d'un tambour tournant alternativement dans un sens et dans l'autre.

Aujourd'hui les lave-linge fonctionnent de façon automatique sous la commande d'un programmateur. Ce dernier comporte la plupart du temps une partie électromécanique à moteur électrique entraînant un système de cames agissant sur des interrupteurs de commande des divers organes de la machine : électrovanne, résistance chauffante, pompe de vidange. A cet élément électromécanique est associé le plus souvent un module électronique.

Il existe trois types de programmateurs (mixtes) à élément électromécanique et module électronique. Une demande de brevet français FR-A-2 588 581 présente un exemple de programmateur mixte.

Dans le premier type la base de temps, ou horloge, du programmateur est déterminée uniquement par la rotation d'une came qui tourne en permanence. Dans ce type de programmateur - appelé à came à rotation continue - le module électronique est utilisé en général pour commander la vitesse et les durées de rotation du moteur d'entraînement du tambour, et pour des fonctions de sécurité. Les programmateurs les plus performants permettent de faire varier la durée des diverses phases de fonctionnement du lave-linge en fonction du type de textile et/ou de la charge de linge. L'élément électromécanique est alors dimensionné sur le programme de plus longue durée que peut exécuter la machine et un second moteur est couplé aux cames pour les faire avancer plus rapidement dans certains cas, par exemple quand la charge de linge est faible. Un tel programmateur comporte habituellement plusieurs temps de base. Il est de réalisation complexe et donc onéreux.

Le second type de programmateur de type mixte ne diffère du premier type seulement par le fait que le sens de rotation du moteur est géré par le module électronique.

Le troisième type de programmateur comporte une horloge uniquement électronique et son élément électromécanique - qui n'a pas de fonction de base de temps - est constitué par un moteur électrique entraînant des moyens de came dont le but est d'agir sur des interrupteurs ou commutateurs de puissance. Ce type de programmateur est également onéreux car il est équipé d'un microprocesseur performant et d'un contrôle de passages de pas de l'élément électromécanique. De plus, pour mémoriser l'état d'exécution du programme en cas d'interruption de l'alimentation en énergie électrique, soit le module électronique est équipé de mémoires EEPROM, soit des moyens sont prévus pour que la position du bloc cames de l'élément électromécanique donne une information sur l'état d'exécution du programme grâce à des moyens de codage entre les cames et le module électronique, tous les pas de programmes devant bien entendu être codés. Ces moyens de mémorisation de l'état d'exécution du programme, qu'ils soient à mémoire EEPROM ou à codage, augmentent encore le prix du programmateur.

L'invention fournit un programmateur peu onéreux permettant de faire varier dans de larges plages la durée de chaque phase de fonctionnement de l'appareil qu'il équipe.

Le programmateur de l'appareil selon l'invention comprend un élément électro-mécanique, avec un unique micromoteur électrique entraînant une came à rotation continue et présentant une base de temps (également de préférence unique); il est caractérisé en ce qu'étant destiné à commander un lave-linge ou sèche-linge à tambour entraîné par un moteur électrique tournant alternativement dans un sens et dans un autre, la commande du sens et des durées de rotation du moteur d'entraînement du tambour est effectuée au moins en partie par l'élément électro-mécanique, ce programmateur comportant en outre un module électronique qui présente une horloge constituant une seconde base de temps du programmateur et qui commande l'arrêt du micromoteur de l'élément électromécanique pendant des temps déterminés de valeurs limitées et de préférence variables.

Dans ce qui suit, le moteur de l'élément électro-mécanique du programmateur sera appelé micromoteur pour le distinguer du moteur d'entraînement du tambour. Ce micromoteur ne peut être arrêté pendant un temps trop important, par exemple supérieur à 40 secondes pour un lave-linge ou supérieur à trois minutes pour un sèche-linge.

En effet, une came de cet élément électromécanique est prévue pour commander le sens de rotation du moteur (d'entraînement du tambour) et ses durées d'arrêt. Lorsque cette came de commande du moteur est à l'arrêt, le tambour tourne toujours dans le même sens ou reste à l'arrêt. Et si la durée de rotation du tambour dans un sens déterminé dépasse 40 secondes (ou 3 minutes) ou si l'arrêt excède cette durée, la qualité du lavage (ou du séchage) peut être altérée.

Pour chaque pas de programmation de l'appareil, c'est-à-dire pour chaque situation électrique de

ce dernier, la base de temps commandant le programme est, soit celle de l'élément électromécanique, soit celle du module électronique, soit l'utilisation dans un même pas des deux bases de temps. En particulier la base de temps du module électronique permet de dilater certains pas de programmation dont la durée de base est fixée par l'élément électromécanique.

De cette manière, l'élément électromécanique peut être de réalisation très simple sans que soit sensiblement augmenté le coût du module électronique. En particulier, cet élément électromécanique ne nécessite pas - contrairement aux programmateurs dans lesquels la base de temps est uniquement dans le module électronique - de moyens de contrôle de passage de pas, ni de codage systématique de tous les pas de programmation. En cas d'arrêt d'alimentation de la machine, l'état d'exécution du programme est représenté directement par la position du bloc de cames sans qu'il soit indispensable de prevoir de décodage complexe.

Dans une réalisation la position du bloc de cames n'est pas codée. Dans ce cas, c'est la position propre de ce bloc de cames de l'élément électromécanique qui représente l'état d'exécution du programme.

Dans une autre réalisation, la position du bloc de cames est codée, ce qui donne directement une information au module électronique pour redémarrer l'exécution du programme après rétablissement de l'alimentation. Le codage est alors plus simple qu'avec un programme à base de temps seulement électronique car le nombre de pas peut être réduit. En effet on prévoit des cames affectées au codage seulement pour les pas correspondant à une gestion effectuée par le module électronique.

On peut, à volonté, faire intervenir la base de temps soit en majorité sur l'élément électromécanique, soit en majorité sur le module électronique. On dispose ainsi d'un degré de liberté qui permet d'optimiser le coût de réalisation du programmateur avec un élément électromécanique simple et/ou un microprocesseur également simple.

Etant donné que le micromoteur de l'élément électromécanique peut tourner moins souvent, la durée de vie de ce dernier est augmentée et les nuisances sonores sont diminuées.

L'invention permet de diminuer le nombre de pas de programmation qui, sur l'élément électromécanique, sont nécessaires pour effectuer un lavage ; on peut ainsi augmenter le nombre de cycles différents qui peuvent être commandés par le même programmateur.

Dans le mode de réalisation préféré, l'élément électromécanique du programmateur est dimensionné pour imposer le programme de plus courte durée et/ou pour réaliser l'enchaînement du nombre minimum "d'états électriques" différents qui sont nécessaires pour exécuter un programme. De cette manière, on réalise des fonctions de lavage rapide ou de lavage à charge réduite ou encore de trempage avec un seul micromoteur et une seule temporisation de l'élément électromécanique. Pour les autres programmes, l'augmentation de durée est déterminée par le module électronique qui commande les arrêts, de durées limitées, du micromoteur de l'élément électromécanique. Ainsi il n'est pas nécessaire que cet élément électromécanique comporte un second moteur de commande de rotation rapide de came ; et il n'est pas nécessaire non plus que cet élément électromécanique présente plusieurs temporisations internes.

La base de temps unique imposée par la rotation d'une came est avantageusement courte, de préférence inférieure à trois minutes. On choisira en général une valeur de la base de temps unique de l'élément électromécanique d'autant plus faible que l'on fera intervenir plus souvent l'horloge du module électronique et/ou que la programmation sera plus complexe, c'est-à-dire qu'elle permet un plus grand nombre de possibilités de cycles de fonctionnement. Avec une base de temps de l'élément électromécanique courte, on peut simplifier au maximum cet élément et faire intervenir la base de temps électronique pour pratiquement chaque phase du programme de l'appareil.

Pour les programmateurs les plus simples, on préfèrera que l'horloge du module électronique intervienne peu souvent, ce qui permet de simplifier les codages.

D'autres caractéristiques et avantages de l'invention apparaîtront avec la description de certains de ses modes de réalisation, celle-ci étant effectuée en se référant aux dessins ci-annexés sur lesquels :

- la figure 1 est un schéma d'un appareil selon l'invention,
- la figure 2 représente une partie d'une came du programmateur de la figure 1,
- la figure $2_a$ est un diagramme se rapportant au fonctionnement de la came de la figure 2,
- la figure 3 est une vue analogue à celle de la figure 2, mais pour une variante,
- la figure 4 est un schéma de montage du micromoteur du programmateur de la figure 1,
- la figure 5 est un schéma de montage du moteur d'entraînement d'un tambour dans le cas où le programmateur comporte une came du type de celle de la figure 3,
- la figure 6 montre une partie du tableau de commande d'un lave-linge, et
- la figure 7 correspond à une partie de la figure 6 mais pour une variante.

La plupart des exemples décrits ci-dessous se rapportent à un lave-linge (non représenté en détail) qui, de façon classique comprend une cuve dans laquelle est introduite l'eau de lavage et de rinçage et dans laquelle tourne un tambour perforé contenant le linge. Le tambour perforé présente des saillies internes pour brasser le linge et il est entraîné en rotation alternativement dans un sens et dans un autre, les rotations en sens contraires étant séparées par des durées d'arrêt. L'eau ou le bain lessiviel de la cuve est chauffé grâce à une ou plusieurs résistances électriques. Un programme de lavage consiste habituellement en un lavage au cours duquel le bain lessiviel dans la cuve est chauffé. Le chauffage s'effectue en une seule fois ou par paliers. On peut également prévoir un palier relativement long à brassage réduit ou nul appelé un trempage. Après le lavage, on prévoit un ou plusieurs rinçages. Enfin, le programme se termine par un essorage. Dans les machines à laver et sécher le linge, on peut ensuite prévoir une période de séchage.

Toutes ces opérations s'effectuent automatiquement sous la commande d'un programmateur.

Ce programmateur comporte deux parties à savoir, d'une part un module électronique 10 (figure 1) et d'autre part, un élément électromécanique 11.

L'élément 11 comprend un micromoteur électrique 12 par exemple de type synchrone entrainant une came à rotation continue 13 qui, elle même, entraîne un bloc de cames (non représenté en détail) qui agissent sur des interrupteurs ou commutateurs pour la mise en marche ou l'arrêt des divers organes de la machine : électrovanne d'admission des produits lessiviels, électrovanne d'admission d'eau, pompe de vidange, résistances chauffantes, et commande du sens de rotation et des durées d'arrêt du moteur 14 d'entraînement du tambour.

L'invention prévoit que le temps de base imposé par la came 13 peut être allongé, sous la commande d'une base de temps dans le module 10, par des durées d'arrêt du micromoteur 12 de l'élément 11. L'invention prévoit aussi que l'élément électromécanique 11 comporte une came 16 ou 17 (figures 2 et 3) agissant sur des interrupteurs de cet élément électromécanique pour imposer un sens de rotation et, éventuellement (figure 2), des durées d'arrêt.

Sur la figure 1, la came 16 ou 17 avec les interrupteurs correspondants est représentée schématiquement par le bloc 15.

Le module électronique 10 comporte un microcontrôleur ou micro-processeur 20 ainsi qu'un triac ou analogue 21 permettant de commander la marche et l'arrêt du micromoteur 12 de l'élément 11.

Le module 10 présente en outre une entrée 22 reliée à une entrée correspondante $22_1$ du microprocesseur 20 et sur laquelle est appliqué un signal représentant la température désirée pour l'eau de lavage. Ce signal est, par exemple fourni par un organe de réglage 23 tel qu'un potentiomètre sur le tableau de commande de la machine.

Une autre entrée 24 du module 10 reçoit le signal fourni par une sonde 25 de détection de la température de l'eau de lavage. Cette entrée 24 du module 10 est connectée à une entrée $24_1$ du micro-processeur 20. Les signaux appliqués sur les entrées $22_1$ et $24_1$ du micro-processeur 20 permettent d'interrompre de chauffage du bain lessiviel quand la température désirée est atteinte.

De façon en soi connue, la sonde 25 comprend une résistance de type CTN ou CTP (coefficient de température négatif ou positif).

Les positions des cames de codage de l'élément 11 sont fournies par des conducteurs 19 à une entrée 28 du microprocesseur 20. Les informations fournies sur l'entrée 28 permettent au microprocesseur de connaître la position des cames et donc l'état d'avancement du programme; ainsi en cas de coupure de l'alimentation en énergie électrique le programme peut redémarrer, après rétablissement de l'alimentation, sur le pas convenable. Il n'est pas indispensable de prévoir un codage pour tous les pas; ce codage n'est utile que pour les opérations où c'est le microprocesseur 20 qui gère le déroulement du programme.

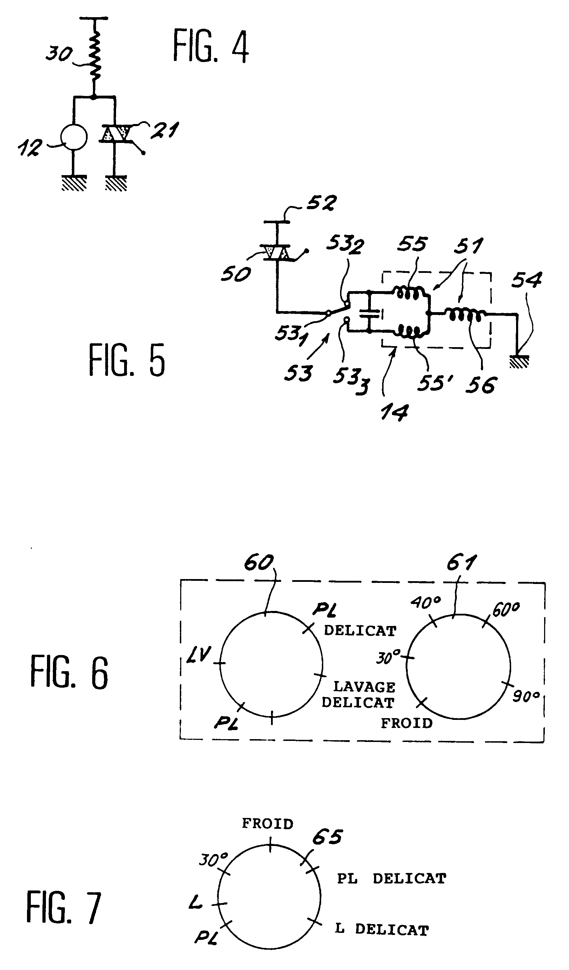

La figure 4 représente un exemple de montage du micromoteur 12 et du triac 21. Dans ce montage, le triac 21 est en parallèle sur le micromoteur 12, l'ensemble étant en série avec une résistance 30 de limitation de courant. Le micromoteur 12 est arrêté quand le triac 21 est conducteur. En variante (non représentée) le triac 21 est en série avec le micromoteur 12 ; dans ce dernier cas, le micromoteur 12 ne tourne que lorsque le triac est conducteur.

On va maintenant décrire, en relation avec les figures 2 et $2_a$ le fonctionnement du programmateur à module électronique 10 et élément électromécanique 11 dans le cas où le bloc 15 comporte une came 16 du type de celle de la figure 2.

La came 16 présente un motif répétitif de trois niveaux 31, 32 et 33. Cette came 16 est couplée à un palpeur 34 qui agit sur un commutateur (non représenté) à trois états . Ce palpeur 34 a une position fixe. Quand la came 16 tourne il détecte le niveau 31, 32 ou 33 avec lequel il est en contact. Lors du contact avec le niveau 31, le moteur tourne dans un sens déterminé appelé, par convention, sens positif. Quand le palpeur est en contact avec la zone au niveau 32, le moteur 14 s'arrête. Quand ce palpeur est en contact avec la zone 33, le moteur tourne dans l'autre sens, appelé sens négatif.

Pour simplifier, on a représenté sur la figure $2_a$ la développée du profil de la came 16 et on a

indiqué les durées $t_1$, $t_2$ et $t_3$ pendant lesquelles, pour un motif 40, le palpeur 34 reste en contact avec le niveau correspondant 31, 32, 33 quand la came tourne sans arrêt.

Les temps $t_1$ et $t_3$ ont, de préférence des valeurs égales.

Etant donné que le micromoteur 12 est arrêté, sous la commande de la base de temps du module 10, pendant des temps déterminés pour certaines phases du programme, selon un aspect de l'invention, ces durées d'arrêt sont limitées à une valeur de l'ordre de 40 secondes (ou 3 minutes pour un sèche-linge).

La répartition dans le temps de ces durées d'arrêt du micromoteur 12 est telle que l'énergie de brassage du linge reste sensiblement constante, c'est-à-dire que le rapport entre les durées d'arrêt et les durées de rotation du moteur 14 restent sensiblement constantes et, en outre, les durées de rotation dans le sens positif restent sensiblement égales aux durées de rotation dans le sens négatif ou restent sensiblement dans la même proportion.

Dans un exemple le micromoteur 12 est arrêté pendant des périodes s de durée constante, puis tourne pendant des périodes $t_0$ également de durée constante. La période $t_0$ est au plus égale à la plus petite des valeurs $t_1$, $t_2$, $t_3$ afin que le palpeur 34 s'arrête successivement à chacun des niveaux 31, 32, 33 c'est-à-dire afin que successivement le moteur 14 tourne dans le sens positif, s'arrête, puis tourne dans le sens négatif, sans sauter une phase de ce motif.

On considèrera d'abord le cas où :
$t_1 = t_3 = mt_2$, m étant un entier. Dans cette hypothèse le micromoteur 12 tourne pendant des périodes de durée $t_2$ séparées par des temps d'arrêt de durée s.

La durée de maintien du palpeur 34 au niveau 31 ou 33 passe alors de $mt_2$ à $m(t_2 + s)$.

Le taux de marche du moteur passe de la valeur

$$\frac{t_1}{t_1+t_2}$$

à la valeur

$$\frac{t_1+ms}{t_1+ms+t_2+s} .$$

On peut choisir les divers paramètres de façon à conserver constant ou sensiblement constant le taux de marche.

A titre d'exemple :

$t_1 = t_3 = 5$ sec.; $t_2 = 2{,}5$ sec. $= t_0$, et $s = 2{,}5$ sec. $m = 2$

On voit que dans ce cas le taux de marche passe de

$$\frac{5}{7{,}5}$$

à $\frac{10}{15}$ c'est-à-dire qu'il reste constant.

Dans un autre exemple les temps d'arrêt du moteur 14 sont plus importants que ses durées de rotation, c'est-à-dire qu'on a la situation dans laquelle : $t_2 = nt_1 = nt_3$. Dans ce cas le fonctionnement est analogue à celui du premier exemple.

Dans une autre réalisation, que l'on va maintenant décrire en relation avec les figures 3 et 5, la came 17 (figure 3) présente deux niveaux 45 et 46 de longueurs égales, c'est-à-dire que le palpeur 34′ actionne un interrupteur à deux positions : quand ce palpeur est en face de la surface 45 le moteur tourne dans le sens positif et quand ce palpeur est en face de la surface 46 le moteur tourne dans le sens négatif. Les durées d'arrêt du moteur 14 sont imposées par le module 10 qui commande la conduction d'un triac 50 en série avec les enroulements 51 du moteur 14 (figure 5).

Dans l'exemple de la figure 5 une borne du triac 50 est reliée à une borne 52 du réseau d'alimentation en énergie électrique tandis que l'autre borne du triac 50 est connectée à la borne commune $53_1$ d'un commutateur 53 à deux positions actionné par le palpeur 34′. Ce commutateur 53 relie la borne $53_1$ à une borne $53_2$ ou à une borne $53_3$ selon que le palpeur 34′ est en face de la surface 45 ou de la surface 46 de la came 17.

La borne $53_2$ est reliée à une seconde borne 54 du réseau par l'intermédiaire d'un enroulement 55 de commande dans le sens positif et d'un autre enroulement 56 du moteur 14. De même la borne $53_3$ est connectée à la borne 54 du réseau par l'intermédiaire d'un autre enroulement 55′ de commande de rotation dans le sens négatif et de l'enroulement 56.

Le fonctionnement est alors le suivant : le module 10 commande l'arrêt du micromoteur 12 pendant une période S quand le palpeur 34′ coopère avec la surface 45. Simultanément ce module 10 commande la conduction du triac 50 en série avec le moteur 14; ce dernier tourne ainsi dans le sens positif; puis le triac de puissance 50 est coupé pendant une période $t_2$ pour arrêter la rotation du moteur 14. Ensuite le micromoteur 12 est de nouveau alimenté pendant une durée $t_1$ qui correspond

à une longueur de niveau 45 ou 46. Après cette rotation du micromoteur 12, le moteur 14 d'entraînement du tambour est de nouveau réalimenté (conduction du triac 50). Le moteur 14 tourne alors dans le sens négatif. L'avantage de ce mode de réalisation est que le commutateur 53 est parcouru par un courant nul quand on lui fait changer de position. Les contacts sont donc peu sollicités.

Dans un exemple la durée $t_1$ de rotation de la came sur une longueur 45 ou 46 est de une seconde, la surée S d'arrêt du micromoteur de 10 secondes et la durée $t_2$ de coupure du triac 50 est de cinq secondes.

Dans le cas d'un programmateur avec came à deux niveaux (figure 3) et arrêts du moteur du tambour commandés par triac 50, le facteur de dilatation du temps de base (un tour de la came 13) peut être relativement important, par exemple 5 à 10. Par contre dans le cas d'une came à trois niveaux (figure 2) le facteur de dilatation est en général moins important, par exemple 3 ou 4.

Quel que soit le mode de réalisation, l'invention permet de dimensionner l'élément électromécanique 11 du programmateur sur un nombre minimum de situations électriques différentes, c'est-à-dire de configurer cet organe électromécanique 11 sur le programme le plus simple, les programmes plus complexes faisant intervenir des allongements ou dilatations de pas de ce programmateur. Pour ces programmes plus complexes, en général plus longs, en général on dilate au moins un pas du programme de l'élément 11. Par "pas" de l'élément 11 on entend un tour de la came 13 à rotation continue.

Il est clair qu'avec cette configuration on peut réaliser des programmes de lavage complexes avec un élément électromécanique 11 d'une grande simplicité, notamment un élément 11 qui présente une seule base de temps et un seul micromoteur 12.

On décrit ci-après quelques exemples de programmation pour un lave-linge.

Premier exemple : lavage rapide ou à faible charge.

Ce programme correspond en général au cycle le plus court dans un lave-linge. Lorsqu'un tel programme est demandé, le module 10 n'intervient pas lors du lavage proprement dit : introduction d'eau dans la cuve (mouillage), chauffage de l'eau et du bain lessiviel et brassage. Le module 10 n'intervient pas non plus sur le micromoteur 12 lors du rinçage. Dans un tel programme, pour limiter la consommation en eau, un organe de sélection est prévu pour que deux rinçages successifs soient fusionnés; a cet effet le sélecteur (non montré) du programme de lavage rapide (ou charge réduite) est monté pour empêcher la vidange entre deux rinçages successifs.

Contrairement aux programmateurs classiques la fonction de "lavage rapide" ou de "charge réduite" n'implique pas de complication (tel qu'un moteur supplémentaire de passage rapide de pas) de l'élément électromécanique 11.

Second exemple : palier de température.

Habituellement le chauffage de l'eau s'effectue de manière que cette dernière atteigne le plus rapidement possible la température désirée. Toutefois dans certains cas il peut être favorable de prévoir un ou plusieurs paliers de température, c'est-à-dire de maintenir pendant un temps déterminé la température de l'eau de lavage à une température inférieure à la température finale. Ainsi on peut améliorer la qualité du lavage pour des types particuliers de taches.

Avec le programmateur de l'invention on prévoit pour le chauffage un nombre limité de pas ou temps de base de l'élément électromécanique du programmateur et un palier de température est obtenu en faisant intervenir la base de temps du module 10 afin d'allonger, comme décrit ci-dessus, ce pas de l'élément électromécanique.

De façon plus précise au cours du chauffage, avant d'atteindre la température du palier, on dimensionne les pas de chauffage (c'est-à-dire les tours de la came à rotation continue, éventuellement dilatés par des arrêts commandés par le microprocesseur) de façon à atteindre la température $Tp - Kt_0$. Tp est la température du palier, $t_0$ est la base de temps de la came à rotation continue, c'est-à-dire la durée pour que cette came effectue un tour complet (sans arrêt) et K est le coefficient d'élévation de la température de l'eau, en degré(s) par minute. Bien entendu on tient compte des dispersions sur la tension d'alimentation en énergie électrique (le secteur) et sur la température de l'eau. Quand cette température $Tp - Kt_0$ est atteinte le micromoteur 12 est alimenté en permanence. On atteint ainsi la température Tp du palier. Ensuite on effectue un brassage pendant un temps qui correspond à un tour de la came à rotation continue, éventuellement dilaté comme décrit ci-dessus.

Après ce brassage le chauffage est repris et lorsque la température finale est atteinte on fait tourner le micromoteur sans arrêt pour passer le (ou les) dernier(s) pas de chauffage et cela sans dilatation du temps de rotation.

Si la température programmée finale est inférieure à la température du palier, les pas de chauffage et de palier sont parcourus sans "dilatation" de la durée de chaque tour de la came 13.

Dans un exemple, pour lequel le temps de base $t_0 = 2$ minutes, on prévoit cinq pas : deux

pas de chauffage, un pas de palier et deux autres pas de chauffage.

A la place (ou en plus) du palier de température avec brassage on peut prévoir un palier de trempage. Un palier de trempage consiste à laisser baigner le linge à une température déterminée pendant un temps relativement long et cela sans brassage ou avec un faible brassage.

Dans le cas présent, compte tenu de la structure du programmateur le palier de trempage s'effectue avec un faible brassage. A cet effet le programmateur comporte plusieurs pas pour ce palier de trempage. Par exemple, toujours avec un temps de base $t_0$ = 2 minutes, on prévoit trois pas pour le palier de trempage. Si le facteur d'allongement du temps sur un pas est de 7,5, le trempage dure au maximum 45 minutes.

Si l'option "trempage" n'est pas sélectionnée le microprocesseur commande le passage des pas de brassage sur le temps de base. Si le palier de température avec brassage du linge est sélectionné on multiplie éventuellement ce temps de base par deux grâce à des arrêts successifs du micromoteur; mais ces durées d'arrêt sont inférieures à celles prévues pour le trempage.

Le passage des pas de palier (brassage ou trempage) est modulé en fonction de la charge. Ainsi le temps de passage de ces pas est dans un exemple deux fois plus important à pleine charge qu'à demi-charge.

On va maintenant décrire en relation avec les figures 6 et 7 le déroulement du programme en fonction de la température de chauffage de l'eau du bain qui a été sélectionnée.

La figure 6 représente deux organes rotatifs 60 et 61 qu'on trouve sur le panneau de commande de la machine. Le bouton 60 permet la sélection du programme : prélavage PL, prélavage (Pl) délicat, lavage L, lavage délicat. Le bouton 61 est associé au potentiomètre 23 de commande de la température du bain lessiviel de lavage : "froid", 30°, 40°, 60°, 90° C.

On notera que le bouton 60 est unique. Selon la position angulaire sélectionnée, le nombre de pas de programmes est plus ou moins important.

Quelle que soit la température sélectionnée par l'organe 61 un prélavage est possible.

On se réfère encore au cas où le temps de base d'un pas de programme est $t_0$ = 2 minutes et le facteur K d'élévation de température est de 1° par minute. Pour les pas de chauffage on a choisi un facteur de dilatation du temps de base égal à 7,5. Dans cet exemple le nombre de pas de chauffage est égal à cinq. Ainsi le temps de chauffage maximum est 75 minutes.

Pour un lavage sans chauffage, c'est-à-dire quand l'organe 61 est sur la position "froid" un interrupteur (non montré) associé à la résistance chauffante empêche le chauffage et, pour le passage des cinq pas de chauffage, le micromoteur tourne en permanence, c'est-à-dire que pour ces pas affectés au chauffage (pour les autres programmes) le temps de brassage est de 10 minutes.

Pour un cycle de lavage à 30°C chaque pas de chauffage ayant une durée maximum de 15 minutes le temps de chauffage correspond donc au maximum au passage de deux pas. Etant donné que le nombre de pas de chauffage est de cinq il faut tenir compte du temps de passage des trois pas restants au cours desquels le chauffage n'est pas interrompu; à cet effet on déclenche le passage rapide de pas pour une température inférieure à la température désirée (30° C). Dans le cas présent, comme il reste trois pas à passer un thermostat déclenche le passage de pas à la température T :

$$T = 30°C - 3\,K\,t_0 = 24°\ C.$$

Bien entendu les trois pas de chauffage restants sont passés sans arrêt du micromoteur.

Pour un cycle de lavage à 40° C le temps de chauffage est inférieur à trois pas. On déclenche donc le passage de pas à la température $T_1$ :

$$T_1 = 40° - 2\,K\,t_0 = 36°\ C.$$

Pour un cycle à 60° C le temps de chauffage est inférieur à quatre pas. Il faut donc au minimum passer un pas supplémentaire. Le déclenchement est donc réglé à $T_2$ :

$$T_2 = 60° - K\,t_0 = 58°\ C.$$

On comprend aisément que la température atteinte après le passage de tous les pas a une précision de ± $Kt_0$.

Dans un autre exemple correspondant à la figure 2 (trois niveaux 31, 32, 33 de la came 16) le nombre de pas de chauffage est plus important que dans l'exemple précédent en raison de la plus faible valeur du facteur de dilatation du temps de base. Dans cet exemple la temporisation de base est : $t_0$ = 3 minutes, le facteur de dilatation maximum est de 3, le facteur K d'élévation de la température à pleine charge est de 1° par minute et le nombre de pas de chauffage est égal à 8.

La durée du temps de base étant plus importante que dans le cas précédent et le nombre de pas de chauffage étant aussi plus important, pour les cycles à température(s) la (les) plus basse(s) (cycle "froid" ou cycle à 30° C) le passage des pas de chauffage risquerait, si on ne prenait pas de précaution particulière, de faire dépasser les températures requises. C'est pourquoi dans ce mode

de réalisation, pour les cycles aux plus basses températures - 30 °C et "froid" - le programme démarre sur les derniers pas de chauffage (cycle à 30 ° C) ou après les pas de chauffage (cycle froid). Cette propriété est illustrée sur la figure 7. Le bouton 65 de sélection de programme comporte une position 30 ° et une position "froid" en plus des positions prélavage (PL), lavage (L), prélavage (PL) délicat et lavage (L) délicat. Pour un programme à 30 ° le programme début après le cinquième pas de chauffage. Pour le cycle froid, le programme débute après tous les (huit) pas de chauffage.

Avec ces cycles "froid" et 30 °C on n'effectue pas de prélavage.

Par contre avec les cycles à 40, 60 et 90 °C il est possible d'effectuer un prélavage.

Pour ces derniers programmes à 40 °, 60 ° ou 90 °C tous les huit pas de chauffage interviennent.

Etant donné que le temps minimum de passage des huit pas est de 24 minutes, pour le cycle à 40 °C on passera les pas pour ce temps minimum, un thermostat commandant le passage des pas quand le température du bain atteint :

$$40° - 8\ Kt_0 = 16°.$$

Pour le programme à 60 °C on règle le thermostat à la température :

$$60 - 5\ Kt_0 = 45\ °C.$$

Chacun des trois premiers pas est passé pendant un temps de 9 minutes tandis que les cinq pas suivants ne font pas intervenir de facteur de dilatation.

Pour le cycle à 90 °C le thermostat est réglé à $90° - Kt_0 = 87\ °C$. Les sept premiers pas se déroulent avec le facteur maximum de dilatation tandis que le dernier pas est passé sans facteur de dilatation.

Ces valeurs correspondent à une température de 17 °C de l'eau introduite dans la cuve du lave-linge. Si la température de l'eau introduite est plus basse la température finale atteinte sera légèrement inférieure à la température désirée, d'au maximum $2Kt_0$. Si l'eau est à température supérieure à 17 °C on surchauffera légèrement en général d'au maximum $Kt_0$.

Pour la gestion du chauffage du bain lessiviel dans le lave-linge on voit que l'invention permet une plus grande précision que dans les lave-linge classiques à programmateur électromécanique et cette gestion ou commande offre plus de possibilités. En fait les possibilités sont pratiquement les mêmes qu'avec un thermostat de type électronique mais sans necessiter l'utilisation d'un triac devant supporter un fort courant, donc de prix élevé. En effet on sait qu'avec les thermostats de type électronique courant, le signal d'erreur, c'est-à-dire la différence entre la température de consigne et la température mesurée est utilisé pour commander un relais ou un triac laissant passer un courant de même intensité que celui passant à travers la résistance chauffante. Dans le cas présent la mise sous tension ou hors tension de la résistance de chauffage est obtenue à l'aide d'un interrupteur du programmateur électromécanique. Le signal d'erreur (c'est-à-dire la différence entre l'information de consigne fournie par le potentiomètre 23 et la température mesurée par la sonde 25) agit certes sur le triac 21, mais le courant traversant ce dernier est de faible intensité; il peut donc être relativement bon marché.

En résumé le contrôle de la température du bain lessiviel s'effectue à un faible coût, du même ordre de grandeur que pour les lave-linge à programmateur électromécanique et avec pratiquement les mêmes possibilités qu'avec les thermostats électroniques.

De façon générale le contrôle de la température du bain s'effectue grâce au microprocesseur de la façon suivante :

Le nombre de pas de programmation (c'est-à-dire le nombre de tours de la came à rotation continue) est égal à N. On désigne par n le rang du pas considéré, c'est-à-dire n = 1 si on se trouve sur le premier pas. $T_p$ est la température programmée, ou température de consigne, et $T_{bn}$ la température du bain lessiviel pour le pas de rang n considéré.

Comme dans les exemples précédents, $t_0$ est le temps de base de la temporisation électromécanique, c'est-à-dire la durée de rotation de la came à rotation continue quand le micromoteur ne s'arrête pas et k (en degré par minute) est le coefficient d'élévation, en fonction du temps, de la température du bain lessiviel.

Le microprocesseur effectue une comparaison entre, d'une part, la différence $T_p - T_{bn}$ et, d'autre part, l'élévation de température qui intervient pour un temps égal au nombre de pas de chauffage restant à traverser sans arrêt du micromoteur et, bien entendu, sans interruption du courant dans la résistance chauffante.

Si le résultat de cette comparaison est tel que :

$$(1) \qquad |T_p - T_{bn}| > |N - (n-1)|\ Kt_0$$

le temps de base est dilaté au maximum, soit jusqu'à la fin du premier pas à passer, soit seulement pendant une fraction de ce pas. La durée de la dilatation maximum dépend de la valeur de la quantité Δ:

$$(2) \qquad \Delta = |T_p - T_{bn}| - |N-(n-1)|\ Kt_0$$

Si Δ est plus grand que $Kt_0$ alors la dilatation intervient sur toute la durée du pas.

Par contre si Δ est plus petit que $Kt_0$, la dilatation n'intervient que pour une fraction du pas. Cette fraction est proportionnelle à la valeur de Δ.

En variante la dilatation intervient sur toute la durée du pas mais le coefficient de dilatation est fonction de la valeur Δ.

Si, au début du pas, la comparaison mentionnée ci-dessus entre $T_p$-$T_{bn}$ et l'élévation de température correspondant au temps de passage le plus court du nombre de pas à traverser, donne le résultat suivant :

(3) $|T_p - T_{bn}| \leqq |N-(n-1)|\ Kt_0$

Le premier pas est traversé dans le temps $t_0$, c'est-à-dire sans arrêt du micromoteur.

Ces diverses opérations de comparaison et de calcul sont effectuées dans le microprocesseur au début de chaque pas de chauffage.

La précision sur la température atteinte à la fin de la phase de chauffage est (K-K′) $t_0$.

Dans cette formule K est un coefficient introduit en mémoire du microprocesseur à la fabrication de l'appareilet K′ est le coefficient réel d'élévation de températue du bain lessiviel.

Les coefficients K et K′ dépendent de la tension du secteur. Le coefficient K correspond à la tension nominale de 230 volts.

Si la tension du secteur peut varier entre 200 volts et 244 volts, et si K = 1° par minute le coefficient K′ varie entre $(200/230)^2$ = 0,75 degré par minute et $(244/230)^2$ = 1,12 degré par minute.

La précision sur la température atteinte dépend aussi de la température de l'eau introduite dans le lave-linge avant chauffage.

Pour bien comprendre cette relation on reprend un des exemples indiqués ci-dessus avec : une came à rotation continue du type de celle de la figure 2; huit pas de chauffage, le départ du chauffage n'intervenant cependant pas sur le premier pas de chauffage pour les programmes à basse température tels que 30° C; K = 1 degré par minute, $t_0$ = 3 minutes et le coefficient de dilatation maximum de ce temps est de 3 minutes. On voit alors que pour le programme à 30° C quatre pas de chauffage à passer, une tension de 244 volts et une température d'eau introduite de 25° C, la température atteinte sera de 38,5° C, et pour une tension de 200 volts et une température d'eau introduite de 5° C, la température du bain de lavage atteindra la température désirée de 30° C. En variante on prévoit trois pas de chauffage pour le cycle 30° C, alors dans les cas extrêmes mentionnés ci-dessus, on obtiendra les températures de 35° C et 25° C.

Le cycle à 40° C sera démarré soit sur le premier des huit pas de chauffage, soit sur le quatrième pas de chauffage.

Dans ce dernier cas pour une eau introduite à 5° C et une tension de 200 volts il faudrait un chauffage de 46 minutes pour atteindre 40° C et dans le cas le plus favorable, c'est-à-dire à une température d'introduction de 25° C et une tension secteur de 240 volts il faudrait 13 minutes de chauffage pour atteindre 40° C. Mais, comme sur cinq pas de chauffage le temps minimum est de 15 minutes, et le temps maximum de 45 minutes, dans le cas le plus défavorable la température atteinte sera de 39° C et dans le cas le plus favorable la température sera de 42° C.

On a décrit ci-dessus un contrôle de la température pour lequel la surveillance de la température du bain s'effectue en permanence ou à la fin de chaque pas. En variante, la mesure ne s'effectue qu'au début de la phase de chauffage; dans ce cas le microprocesseur détermine à l'avance comment les pas seront passés pour atteindre la température désirée. Par exemple deux pas seront passés avec une dilatation maximum du temps de base, un pas avec une dilatation modérée et les autres pas sans dilatation, cette répartition de la durée des pas dépendant bien entendu de l'écart entre la température désirée et la température initiale. Cette réalisation permet une programmation plus simple du microprocesseur et ainsi l'utilisation d'un microprocesseur 20 à performances moins élevées et donc à moindre coût.

On notera que, tant dans le cas de la figure 6 que dans le cas de la figure 7, les programmes PL (prélavage) et L (lavage) sont décalés par rapport aux programmes de "prélavage délicat" et "lavage délicat". Cette configuration correspond au fait que les pas des programmes associés au prélavage et au lavage des textiles normaux sont séparés des pas de programme associés au traitement de linges ou textiles délicats. Par exemple si le programmateur comporte 60 pas, 40 pas sont affectés aux programme normaux et 20 pas aux programmes de traitement du linge délicat. Cette séparation en "programmes enchaînés" est rendue possible, de façon économique, par l'invention qui diminue le nombre de pas de programmateur électromécanique qu'il est nécessaire d'utiliser.

Le programmateur décrit ci-dessus peut également être utilisé pour un sèche-linge. Dans ce cas la température mesurée est, par exemple, la température de l'air sortant du linge qui représente le degré de séchage. A cette température mesurée correspond une température de consigne qui représente le degré de séchage désiré. Pour le reste, la structure et le fonctionnement du programmateur sont peu différents des structures correspondantes décrites ci-dessus.

On a mentionné ci-dessus qu'avec une came 16 (figure 2) présentant un profil à trois niveaux, le facteur de dilatation maximum du temps de base $t_0$ était de 3. Bien entendu l'invention n'est pas limitée à cet exemple. Ce facteur de dilatation peut être sensiblement supérieur : 4 ou même 10.

De même pour le mode de réalisation décrit en relation avec la figure 3 l'invention n'est pas limitée à un facteur de dilatation de l'ordre de 8. Ce facteur peut atteindre 100.

**Revendications**

**1.** Appareil électroménager de type lave-linge ou sèche-linge à programmateur comportant, d'une part, un organe électromécanique (11) à micromoteur (12), de préférence synchrone, entraînant une came à rotation continue (13) formant une première base de temps et entraînant elle-même un bloc came agissant sur des interrupteurs ou commutateurs de commande de premier(s) dispositif(s) de l'appareil et, d'autre part, un module électronique (10), le lave-linge ou sèche-linge étant à tambour entraîné par un moteur électrique (14) tournant alternativement dans un sens et dans un autre, caractérisé en ce que la commande du sens et des durées de rotation du moteur d'entraînement du tambour est effectuée au moins en partie par l'élément électromécanique (11), et en ce que le module (10) comporte une seconde base de temps pour commander l'arrêt du micromoteur (12) pendant des temps déterminés de valeurs limitées.

**2.** Appareil selon la revendication 1, caractérisé en ce que l'organe électromécanique est dimensionné pour commander le programme de la machine de plus courte durée quand le module électronique ne commande pas d'arrêt du micromoteur, les programmes plus longs étant exécutés avec des arrêts, commandés par le module, du micromoteur.

**3.** Appareil selon la revendication 1 ou 2, caractérisé en ce que l'organe électromécanique est dimensionné pour l'enchaînement du nombre minimum de situations électriques différentes nécessaires pour exécuter un programme.

**4.** Appareil selon l'une quelconque des revendications 1 à 3, caractérisé en ce qu'une came (16) du bloc came a un profil à trois niveaux (31, 32, 33) auxquels est associé un palpeur (34) actionnant un commutateur à trois états, le premier état correspondant au premier niveau (31) et à une rotation du moteur (14) d'entraînement du tambour dans un sens, le second état au second niveau (32) et à l'arrêt de ce moteur et le troisième état au troisième niveau (33) et à la rotation du moteur dans l'autre sens.

**5.** Appareil selon la revendication 4, caractérisé en ce que l'arrêt du micromoteur commandé par le module augmente la durée de révolution d'une came à rotation continue d'un facteur égal au maximum à dix environ.

**6.** Appareil selon l'une quelconque des revendications précédentes, caractérisé en ce que les temps déterminés d'arrêt du micromoteur sont variables.

**7.** Appareil selon l'une quelconque des revendications 1 à 3, caractérisé en ce qu'une came (17) du bloc came présente deux niveaux (45, 46) associés à un palpeur (34′) agissant sur un commutateur (53) à deux positions, la première position ($53_1$) correspondant à une rotation du moteur d'entraînement du tambour dans un sens et la seconde position ($53_2$) à une rotation de ce moteur dans l'autre sens, et en ce qu'un interrupteur (50) commandé par le module (10) est associé au moteur (14) d'entraînement du tambour pour commander son arrêt.

**8.** Appareil selon la revendication 7, caractérisé en ce que le module (10) commande la conduction de l'interrupteur commandé (50) de façon que le commutateur à deux positions (53) ne soit pas parcouru par un courant quand le palpeur (34′) passe d'un niveau (45, 46) de came (17) à un autre.

**9.** Appareil selon la revendication 7 ou 8, caractérisé en ce que l'interrupteur commandé comporte un triac.

**10.** Appareil selon l'une quelconque des revendications 7 à 9, caractérisé en ce que la durée déterminée d'arrêt du micromoteur est choisie pour augmenter la durée de révolution de la came à rotation continue d'un facteur de l'ordre de 100 au maximum.

**11.** Appareil selon l'une quelconque des revendications précédentes, caractérisé en ce que les temps déterminés d'arrêt du micromoteur (12) sont tels que le rapport entre les durées de rotation et les durées d'arrêt du tambour reste sensiblement constant.

**12.** Appareil selon l'une quelconque des revendications précédentes, caractérisé en ce que les

temps déterminés d'arrêt du micromoteur (12) sont tels que les durées de rotation du tambour dans un sens restent égales aux durées de rotation du tambour dans l'autre sens.

**13.** Appareil selon l'une quelconque des revendications précédentes, du type lave-lige, comprenant une cuve dans laquelle est chauffé un liquide avec une sonde de mesure de la température de ce liquide et un organe (23) de réglage de la température de consigne, ainsi que des moyens pour que le module impose des temps d'arrêt du micromoteur (12) les plus importants pendant la durée du chauffage jusqu'à ce qu'ait atteinte une température égale à la température de consigne diminuée de l'élévation de température correspondant au temps de passage du (ou des) pas de l'organe électromécanique pour lequel (lesquels) le chauffage continue.

**14.** Appareil du type lave-linge selon l'une quelconque des revendications précédentes, caractérisé en ce qu'il comporte un programme de prélavage associable à plusieurs températures de lavage.

**15.** Appareil selon l'une quelconque des revendications précédentes, caractérisé en ce que le module électronique comporte un microprocesseur ou microcontrôleur (20) de gestion des arrêts du micromoteur (12).

**16.** Appareil selon l'une quelconque des revendications précédentes, caractérisé en ce que le micromoteur (12) de l'organe électromécanique (11) est unique.

**17.** Appareil selon l'une quelconque des revendications précédentes, caractérisé en ce que les moyens de came de l'organe électromécanique (11) sont agencés pour que le temps élémentaire de cet organe soit unique.

**18.** Appareil de type lave-linge selon l'une quelconque des revendications précédentes, caractérisé en ce que qu'il comporte un programme à exécution rapide ou charge réduite pour lequel, au cours d'une phase de fonctionnement, le micromoteur de l'organe électromécanique n'est pas arrêté, la même phase de fonctionnement pour un programme différent impliquant un arrêt du micromoteur commandé par le module (10).

**19.** Appareil de type lave-linge selon l'une quelconque des revendications précédentes, caractérisé en ce que des types différents de lavage sont commandés par des successions distinctes de pas de l'organe électromécanique.

**20.** Appareil électroménager du type lave-linge ou sèche-linge à programmateur comportant, d'une part, un organe électromécanique (11) à micromoteur (12), de préférence synchrone, entraînant une came à rotation continue (13) formant une première base de temps et entraînant elle-même un bloc came agissant sur des interrupteurs ou commutateurs de commande de premier dispositif de l'appareil et, d'autre part, un module électronique (10), caractérisé en ce que le module (10) comporte une seconde base de temps pour commander l'arrêt du micromoteur (12) pendant des temps déterminés de valeurs limitées, en ce que le bloc came agit sur un interrupteur ou commutateur de commande d'une résistance de chauffage et en ce qu'il comporte des moyens de mesure de température, les durées d'arrêt du micromoteur (12) étant fonction de l'écart entre la température mesurée et la température désirée.

**21.** Appareil selon la revendication 20, caractérisé en ce que le chauffage s'effectuant sur plusieurs tours ou pas de la came à rotation continue (13) la mesure de la température est effectuée au début de chaque pas, le module électronique (10) déterminant pour ce pas la (ou les) durée(s) d'arrêt du micromoteur (12).

**22.** Appareil selon la revendication 20, caractérisé en ce que le chauffage correspondant à plusieurs tours, ou pas, de la came à rotation continue (13) la mesure de température est effectuée une seule fois, le module (10) déterminant la (ou les) durée(s) d'arrêt pour le micromoteur (12) à chaque pas.

**23.** Appareil selon la revendication 21 ou 22, caractérisé en ce que le chauffage étant en action pour tous les pas de chauffage, le module impose un (ou des) temps d'arrêt du micromoteur (12) le (ou les plus) important(s) jusqu'à ce qu'ait été atteinte une température égale à la température de consigne diminuée de l'élévation de température correspondant au temps de passage du (ou des) pas restant(s).

## Claims

**1.** An electric domestic appliance such as a washing machine or a laundry dryer with a program unit including on the one hand an electromechanical device (11) having a micromotor (12), preferably a synchronous motor

which drives a continuously rotating cam disk (13) constituting a first time base, this disk further driving a cam block which controls interruptors or control switches of the appliance, and on the other hand an electronic module (10), the washing machine or the laundry dryer having a drum driven by an electric motor (14) alternately in one or the other direction, characterized in that the control of the direction and of the duration of rotation of the drum driving motor is ensured at least in part by the electromechanical device (11), and that the module (10) comprises a second time base for controlling the stops of the micromotor (12) during predetermined time periods of limited values.

**2.** An appliance according to claim 1, characterized in that the electromechanical device is conceived to control the shortest machine program, whereby the electronic module does not control the stopping of the micromotor, while the programs of longer duration are executed via stop periods of the micromotor which are controlled by the module.

**3.** An appliance according to claim 1 or 2, characterized in that the electromechanical device is conceived to link the minimum number of different electric situations which are necessary for executing a program.

**4.** An appliance according to any one of claims 1 to 3, characterized in that one cam disk (16) of the cam block presents a profile including three levels (31, 32, 33) to which a sensor pin (34) is associated for controlling a switch having three states, the first state corresponding to the first level (31) and to a rotation of the drum driving motor (14) in one direction, the second state corresponding to the second level (32) and to the stop period of this motor and the third state corresponding to the third level (33) and to the rotation of the motor in the other direction.

**5.** An appliance according to claim 4, characterized in that the stopping of the micromotor under the control of the module increases the duration of revolution of a continuously rotating cam disk by a factor equal to at most about 10.

**6.** An appliance according to any one of the preceding claims, characterized in that the predetermined stop period of the micromotor is variable in length.

**7.** An appliance according to any one of claims 1 to 3, characterized in that one cam disk (17) of the cam block presents two levels (45, 46) associated to a sensor pin (34') which controls a switch (53) having two positions, the first position ($53_1$) corresponding to the rotation of the drum driving motor in one direction and the second position ($53_2$) to the rotation of this motor in the other direction, and that a switch (50) controlled by the module (10) is associated to the drum driving motor (14) for controlling its stop period.

**8.** An appliance according to claim 7, characterized in that the module (10) controls the controlled switch (50) in such a way that the switch (53) having two switch positions does not receive a current while the sensor pin (34') transits from one level (45, 46) of the cam disk (17) to another.

**9.** An appliance according to claim 7 or 8, characterized in that the controlled switch includes a triac switch.

**10.** An appliance according to any one of claims 7 to 9, characterized in that the predetermined stop period of the micromotor is selected in order to increase the duration of revolution of the continuously rotating cam disk by a factor of at most about 100.

**11.** An appliance according to any one of the preceding claims, characterized in that the predetermined stop periods of the micromotor (12) are chosen in such a way that the ratio between the drum rotation and drum stop periods remain substantially constant.

**12.** An appliance according to any one of the preceding claims, characterized in that the predetermined stop durations of the micromotor (12) are chosen in such a way that the rotation period of the drum in one direction remains equal to the rotation period of the drum in the other direction.

**13.** An appliance such as a washing machine according to any one of the preceding claims, comprising a tank in which a liquid is heated up, a detector for measuring the temperature of the liquid and a member (23) for regulating the temperature set point, as well as means allowing the module to impose on the micromotor the longest stop periods during the heating period until the temperature equals the set temperature minus the temperature increase corresponding to the laps of time of the step or

steps of the electromechanical device during which the heating continues.

**14.** An appliance such as a washing machine according to any one of the preceding claims, characterized in that it comprises a prewash program which can be associated to different washing temperatures.

**15.** An appliance according to any one of the preceding claims, characterized in that the electronic module comprises a microprocessor or a microcontroller (20) for controlling the stop periods of the micromotor (12).

**16.** An appliance according to any one of the preceding claims, characterized in that the micromotor (12) of the electromechanical device (11) is unique.

**17.** An appliance according to any one of the preceding claims, characterized in that the cam means of the electromechanical device (11) are arranged in such a way that the elementary time unit of this device is unique.

**18.** An appliance such as a washing machine according to any one of the preceding claims, characterized in that it includes a program for rapid washing or for a reduced laundry charge in which during one operating phase the micromotor of the electromechanical device is not stopped, while the same operating phase for a different program implies stopping of the micromotor under control of the module (10).

**19.** An appliance such as a washing machine according to any one of the preceding claims, characterized in that different washing programs are controlled by different sequences of steps of the electromechanical device.

**20.** An electric domestic appliance such as a washing machine or a laundry dryer with a program unit including on the one hand an electromechanical device (11) having a micromotor (12), preferably a synchronous motor which drives a continuously rotating cam disk (13) constituting a first time base, said disk further driving a cam block which controls interruptors or control switches of the appliance, and on the other hand an electronic module (10), characterized in that the module (10) includes a second time base for controlling the stop periods of the micromotor (12) during predetermined periods of limited values, that the cam block acts on an interruptor or a control switch of a heater resistance and that it comprises means for measuring the temperature, the stop periods of the micromotor (12) depending on the difference between the measured and the desired temperature.

**21.** An appliance according to claim 20, characterized in that the heating being performed during several rotations or steps of the continuously rotating cam disk (13), and that the measurement of the temperature is performed at the beginning of each step, the electronic module (10) determining for each step the stop period or periods of the micromotor (12).

**22.** An appliance according to claim 20, characterized in that the heating period corresponds to several turns or steps of the continuously rotating cam disk (13), and that the measurement of the temperature is performed only once, the module (10) determining the stop period or periods for the micromotor (12) at each step.

**23.** An appliance according to claim 21 or 22, characterized in that the heating operation taking place along all the heating steps, the module imposes the longest stop period or periods of the micromotor (12) until a temperature equal to the set temperature minus the temperature increase rate corresponding to the laps of time of the remaining step or steps is obtained.

**Patentansprüche**

**1.** Haushaltsgerät vom Typ Waschmaschine oder Wäschetrockner mit einer Programmeinheit, die einerseits ein elektromechanisches Organ (11) mit Mikromotor (12), vorzugsweise Synchronmotor, zum Antrieb einer kontinuierlich umlaufenden Nockenscheibe (13), die eine erste Zeitbasis bildet und ihrerseits einen Nockenblock antreibt, der die Unterbrecher oder Steuerschalter des Geräts betätigt, und andererseits einen elektronischen Modul (10) enthält, wobei die Waschmaschine oder der Wäschetrockner eine durch einen Elektromotor (14) angetriebene Trommel besitzt, die wahlweise in der einen oder anderen Richtung dreht, dadurch gekennzeichnet, daß die Steuerung der Richtung und der Dauer der Drehung des Antriebsmotors für die Trommel zumindest teilweise durch das elektromechanische Element (11) erfolgt und daß der Modul (10) eine zweite Zeitbasis besitzt, um das Anhalten des Mikromotors (12) während bestimmter Zeiten begrenzter Dauer zu steuern.

**2.** Gerät nach Anspruch 1, dadurch gekennzeichnet, daß das elektromechanische Organ so gestaltet ist, daß es das kürzeste Maschinenprogramm steuert, wenn der elektronische Modul kein Anhalten des Mikromotors veranlaßt, während die längeren Programme mit Pausen des Mikromotors ausgeführt werden, die durch den Modul gesteuert werden.

**3.** Gerät nach Anspruch 1 oder 2, dadurch gekennzeichnet, daß das elektromechanische Organ so gestaltet ist, daß es eine für die Ausführung eines Programms erforderliche Mindestzahl unterschiedlicher elektrischer Situationen miteinander verkettet.

**4.** Gerät nach einem beliebigen der Ansprüche 1 bis 3, dadurch gekennzeichnet, daß eine Nokkenscheibe (16) des Nokkenblocks ein Profil mit drei Höhen (31, 32, 33) aufweist, denen ein einen Schalter mit drei Zuständen betätigender Taststift (34) zugeordnet ist, wobei der erste Zustand entsprechend der ersten Höhe (31) der Drehung des die Trommel antreibenden Motors (14) in einer Richtung, der zweite Zustand entsprechend der zweiten Höhe (32) dem Anhalten dieses Motors und der dritte Zustand entsprechend der dritten Höhe (33) der Drehung des Motors in der anderen Richtung zugewiesen ist.

**5.** Gerät nach Anspruch 4, dadurch gekennzeichnet, daß das Anhalten des vom Modul gesteuerten Mikromotors die Umlaufdauer einer Nokkenscheibe um einen Faktor von höchstens etwa 10 verlängert.

**6.** Gerät nach einem beliebigen der vorhergehenden Ansprüche, dadurch gekennzeichnet, daß die bestimmten Haltepausen des Mikromotors verschieden lang sind.

**7.** Gerät nach einem beliebigen der Ansprüche 1 bis 3, dadurch gekennzeichnet, daß eine Nokkenscheibe (17) des Nokkenblocks zwei Höhen (45, 46) aufweist, die einem auf einen Schalter (53) mit zwei Stellungen einwirkenden Taststift (34') zugeordnet sind, wobei die erste Schaltstellung ($53_1$) einer Drehung des Antriebsmotors für die Trommel in einer Richtung und die zweite Schaltstellung ($53_2$) der Drehung dieses Motors in der anderen Richtung entspricht, und daß ein vom Modul (10) gesteuerter Unterbrecher (50) dem Antriebsmotor (14) für die Trommel zugeordnet ist, um deren Haltepause zu steuern.

**8.** Gerät nach Anspruch 1, dadurch gekennzeichnet, daß der Modul (10) den gesteuerten Unterbrecher (50) leitend steuert, so daß der Schalter mit zwei Stellungen (53) nicht von Strom durchflossen ist, wenn der Taststift (34') von einer Höhe (45, 46) der Nockenscheibe (17) zu einer anderen übergeht.

**9.** Gerät nach Anspruch 7 oder 8, dadurch gekennzeichnet, daß der gesteuerte Unterbrecher einen Triac-Schalter enthält.

**10.** Gerät nach einem beliebigen der Ansprüche 7 bis 9, dadurch gekennzeichnet, daß die bestimmte Haltepause des Mikromotors so gewählt ist, daß die Umlaufdauer der Nockenscheibe um einen Faktor in der Größenordnung von höchstens 100 zunimmt.

**11.** Gerät nach einem beliebigen der vorhergehenden Ansprüche, dadurch gekennzeichnet, daß die vorbestimmte Haltepause des Mikromotors (12) so gewählt ist, daß das Verhältnis zwischen den Drehperioden und den Haltepausen der Trommel im wesentlichen konstant bleibt.

**12.** Gerät nach einem beliebigen der vorhergehenden Ansprüche, dadurch gekennzeichnet, daß die bestimmten Haltepausen des Mikromotors (12) so gewählt sind, daß die Dauer der Drehung der Trommel in einer Richtung und die Dauer der Drehung der Trommel in der anderen Richtung gleich lang sind.

**13.** Gerät nach einem beliebigen der vorhergehenden Ansprüche für eine Waschmaschine mit einem Laugenbehälter, in dem eine Flüssigkeit erwärmt wird, mit einer Sonde zur Messung der Temperatur dieser Flüssigkeit und einem Organ (23) zur Regelung der Solltemperatur sowie mit Mittel, die bewirken, daß der Modul während der Heizdauer die größtmöglichen Haltepausen des Mikromotors (12) herstellt, bis eine Temperatur gleich der Solltemperatur minus des Temperaturanstiegs erreicht ist, die der Zeitdauer des Übergangs des Schritts oder der Schritte des elektromechanischen Organs entspricht, während dem bzw. denen die Aufheizung fortgesetzt wird.

**14.** Gerät nach Art einer Waschmaschine nach einem beliebigen der vorhergehenden Ansprüche, dadurch gekennzeichnet, daß es ein Vorwaschprogramm aufweist, das mehreren Waschtemperaturen zugeordnet werden kann.

**15.** Gerät nach einem beliebigen der vorhergehenden Ansprüche, dadurch gekennzeichnet, daß

der elektronische Modul einen Mikroprozessor oder ein Mikrokontrollorgan (20) zur Verwaltung der Haltepausen des Mikromotors (12) besitzt.

**16.** Gerät nach einem beliebigen der vorhergehenden Ansprüche, dadurch gekennzeichnet, daß nur ein Mikromotor (12) im elektromechanischen Organ (11) vorhanden ist.

**17.** Gerät nach einem beliebigen der vorhergehenden Ansprüche, dadurch gekennzeichnet, daß die Nockenscheiben des elektromechanischen Organs (11) so ausgebildet sind, daß nur eine Elementarzeit in diesem Organ vorliegt.

**18.** Gerät nach Art einer Waschmaschine nach einem beliebigen der vorhergehenden Ansprüche, dadurch gekennzeichnet, daß es ein Schnellwaschprogramm oder Programm für verringerte Wäschemenge aufweist, bei dem während einer Betriebsphase der Mikromotor des elektromechanischen Organs nicht angehalten wird, während die gleiche Betriebsphase für ein anderes Programm zu einem durch den Modul (10) gesteuerten Anhalten des Mikromotors führt.

**19.** Gerät vom Typ einer Waschmaschine nach einem beliebigen der vorhergehenden Ansprüche, dadurch gekennzeichnet, daß die verschiedenen Waschprogramme durch unterschiedliche Schrittfolgen des elektromechanischen Organs gesteuert werden.

**20.** Haushaltsgerät vom Typ Waschmaschine oder Wäschetrockner mit einer Programmeinheit, die einerseits ein elektromechanisches Organ (11) mit Mikromotor (12), vorzugsweise Synchronmotor, zum Antrieb einer kontinuierlich umlaufenden Nockenscheibe (13), die eine erste Zeitbasis bildet und ihrerseits einen Nockenblock antreibt, der die Unterbrecher oder Steuerschalter des Geräts betätigt, und andererseits einen elektronischen Modul (10) enthält, dadurch gekennzeichnet, daß der Modul (10) eine zweite Zeitbasis aufweist, um das Anhalten des Mikromotors (12) während bestimmter Perioden begrenzter Dauer zu steuern, daß der Nockenblock auf einen Unterbrecher oder Steuerschalter eines Heizwiderstands einwirkt und daß Mittel zur Temperaturmessung vorgesehen sind, wobei die Dauer der Haltepause des Mikromotors (12) vom Abstand zwischen der gemessenen und der gewünschten Temperatur abhängt.

**21.** Gerät nach Anspruch 20, dadurch gekennzeichnet, daß die Heizung über mehrere Umläufe oder Schritte der kontinuierlich laufenden Nockenscheibe (13) erfolgt und daß die Messung der Temperatur zu Beginn jedes Schritts erfolgt, wobei der elektronische Modul (10) für diesen Fall die Dauer bzw. die Dauern der Haltepausen des Mikromotors (12) bestimmt.

**22.** Gerät nach Anspruch 20, dadurch gekennzeichnet, daß die Aufheizung mehreren Umläufen oder Schritten der kontinuierlich umlaufenden Nockenscheibe (13) entspricht und daß die Temperaturmessung nur einmal erfolgt, wobei der Modul (10) die Dauer bzw. Dauern der Haltepausen des Mikroprozessors (12) bei jedem Schritt bestimmt.

**23.** Gerät nach Anspruch 21 oder 22, dadurch gekennzeichnet, daß die Heizung während aller Heizschritte wirksam ist und der Modul eine oder mehrere Haltepausen größter Länge des Mikromotors (12) bewirkt, bis eine Temperatur gleich der Solltemperatur minus des Temperaturanstiegs entsprechend der Dauer des noch verbleibenden Schritts bzw. der noch verbleibenden Schritte erreicht ist.

FIG. 1

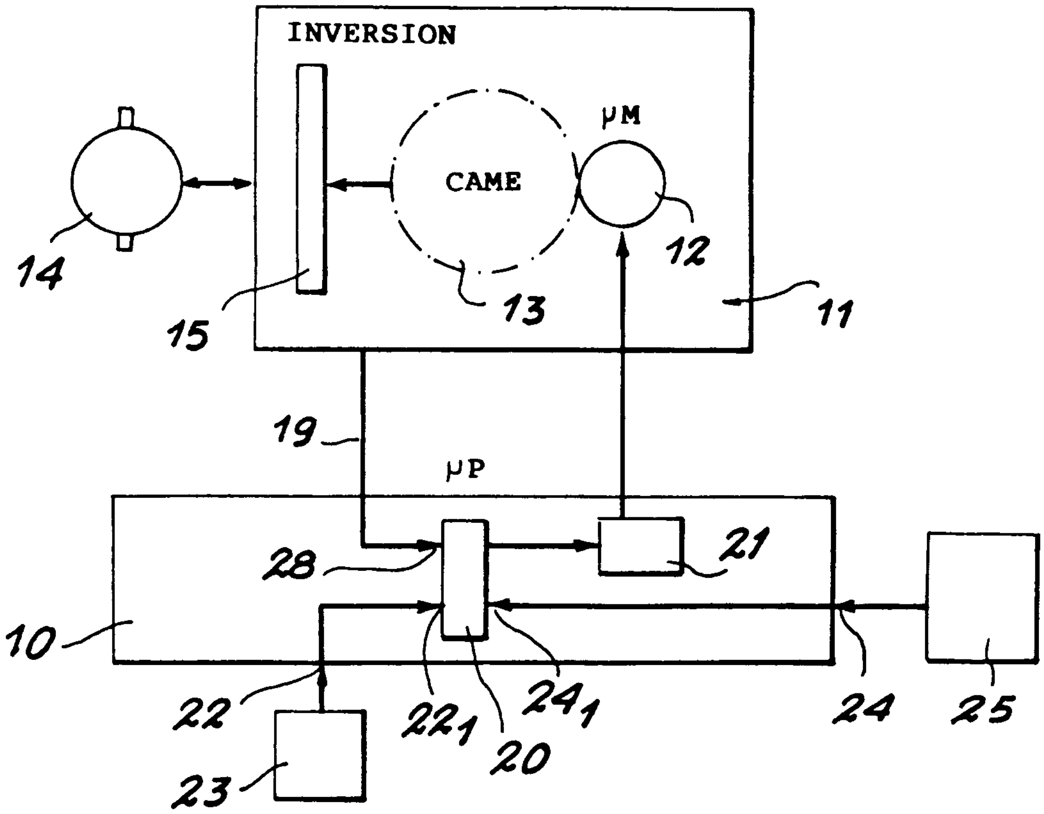


FIG. 2

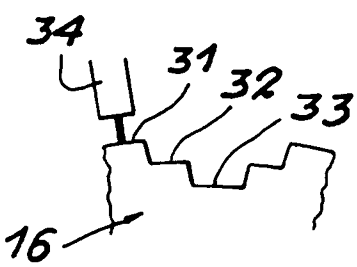


FIG. 2 a

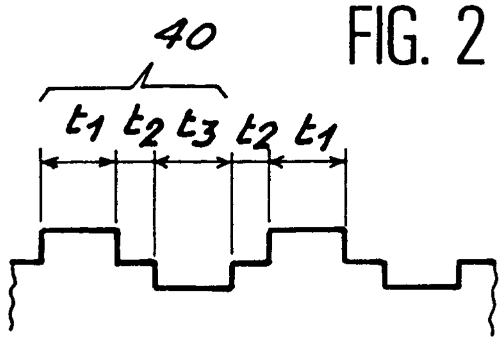


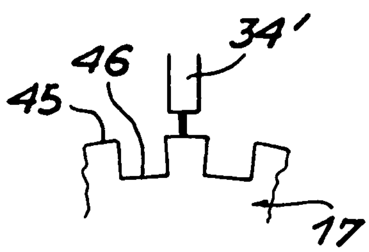


FIG. 3

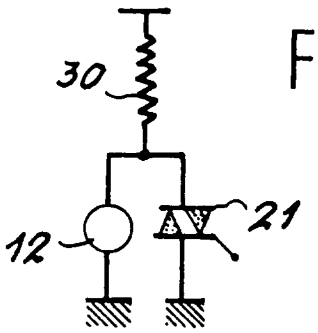


FIG. 4

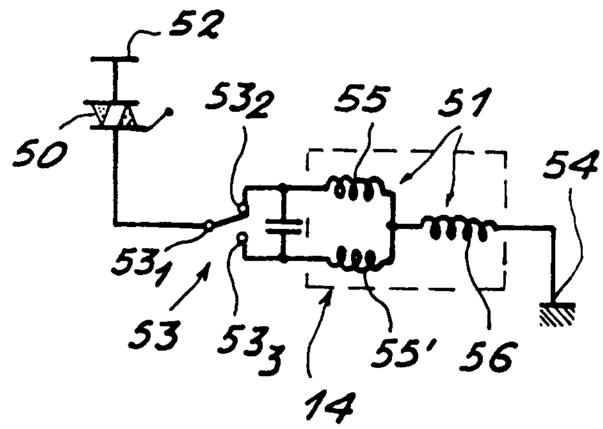


FIG. 5

FIG. 6

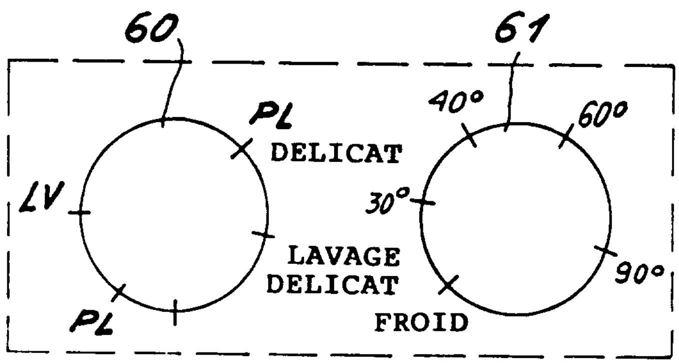


FIG. 7